# DEMANDE DE BREVET EUROPEEN

(11) **EP 1 418 707 A1**
(43) Date de publication de la demande: **12.05.2004**
(21) Numéro de dépôt: 03024683.9
(22) Date de dépôt: 28.10.2003
(51) Int. Cl.: H04L 12/24

(54) **Procédé et système de mesure des paramètres de qualité d'un service de type web**

(30) Priorité: 08.11.2002 FR 0214133
(71) Demandeur: FRANCE TELECOM, 75015 Paris (FR)
(72) Inventeur: Agostini, Pierre, 14320 Feuguerolles (FR); Mittig, Karel, 14000 Caen (FR)

(57) **Abrégé**

L'invention concerne un procédé et un système de mesure des paramètres de qualité d'un service de type web dépendant de la qualité d'un réseau (6), notamment de la durée de téléchargement, sur un dispositif de communications (1), d'une page d'informations envoyée par un serveur d'informations (2), via ledit réseau. Le dispositif établit d'abord une première requête d'accès (R1) auprès du serveur selon laquelle est demandé le téléchargement d'une page d'information (P2). Des moyens de génération de page d'informations fictive reliés au réseau adressent en retour au dispositif une page d'informations fictive (P1), ladite page comprenant des moyens de commande de navigation, par le dispositif, sur le réseau, et des moyens de mesure de qualité de service, dont la durée de téléchargement. Ces moyens de commande déclenchent l'envoi, par le dispositif de communications, d'une seconde requête d'accès (R3) auprès du serveur (2) selon laquelle est demandé le téléchargement de la page (P2). Le serveur adresse alors la page d'informations demandée initialement au dispositif, les moyens de mesure déterminant alors un temps de fin de mesure, puis calculant la durée entre les temps de fin et de début de la mesure.

## Description

La présente invention concerne un procédé de mesure des paramètres de qualité d'un service de type web dépendant de la qualité d'un réseau, notamment de la durée de téléchargement, sur un dispositif de communications, d'une page d'informations envoyée par un serveur d'informations, via ce réseau.

Un tel procédé entre dans le cadre de la mise en oeuvre d'outils de suivi de qualité de service destinés à mesurer, améliorer ou garantir les caractéristiques objectives de transmission, de trafic ou de disponibilité dans les réseaux de données en général, et plus particulièrement dans le réseau Internet.

A l'heure actuelle, il existe deux types d'outils de mesure de qualité de service sur le réseau Internet :
- les outils d'analyse côté serveur d'hébergement de sites d'informations, lesquels fonctionnent en exploitant les fichiers de trace de toutes les connexions qui sont produits par le serveur,
- les outils d'analyse côté client qui consistent chacun en un logiciel spécifique installé sur le dispositif de communications de clients volontaires et répartis partout dans le monde, de façon à constituer un ensemble de dispositifs clients jugés représentatifs du trafic mondial. Un tel logiciel est apte soit à mesurer les caractéristiques du trafic sur le réseau Internet, soit à soumettre régulièrement des requêtes vers un ou plusieurs sites à analyser.

L'inconvénient du premier type d'outils réside dans le fait qu'il ne permet ni d'évaluer le nombre de clients qui n'ont pas pu accéder au site ou qui se sont déconnectés suite à une erreur, ni de mesurer les temps de connexion au serveur qui sont parfois élevés. En outre, ce premier type d'outils nécessite de grosses capacités d'analyse centralisées et effectue généralement des traitements à posteriori des fichiers de trace des serveurs. Enfin, de tels outils ne peuvent pas être mutualisés entre plusieurs sites Web.

L'inconvénient du second type d'outils réside dans le fait que l'échantillon d'utilisateurs dit "représentatif" comporte finalement un nombre assez réduit de personnes et que la représentativité des dispositifs clients dotés de tels outils s'avère, de ce fait, douteuse. Par ailleurs, la mesure n'est jamais transparente du point de vue du client.

La présente invention a notamment pour but de remédier aux inconvénients précités.

A cet effet, le procédé selon l'invention est caractérisé en ce qu'il comprend au moins les étapes suivantes:
- a) le dispositif de communications établit une première requête d'accès auprès du serveur d'informations selon laquelle est demandé le téléchargement d'une page d'informations,
- b) des moyens de génération de page d'informations fictive reliés au réseau envoient en retour en direction du dispositif de communications une page d'informations fictive, ladite page comprenant des moyens de commande de navigation sur le réseau, par le dispositif de communications, et des moyens de mesure d'au moins un paramètre de qualité de service,
- c) les moyens de mesure déterminent une date de début de mesure correspondant au téléchargement de cette page fictive,
- d) les moyens de commande de navigation déclenchent l'envoi, par le dispositif de communications, d'une seconde requête d'accès auprès du serveur d'informations selon laquelle est demandé le téléchargement de la page d'informations qui aurait dû être retournée initialement,
- e) le serveur d'informations envoie la page d'informations demandée initialement en direction du dispositif de communications, les moyens de mesure déterminant alors une date de fin de mesure,
- f) les moyens de mesure calculent la durée de mesure qui correspond à la différence entre la date de fin de mesure et la date de début de mesure.

Un tel procédé de mesure est ainsi transparent pour le client détenteur du dispositif de communications et permet l'obtention de résultats de mesure quasiment en temps réel. Par ailleurs, il ne nécessite pas forcément l'installation d'équipements particuliers côté serveur ou côté dispositif de communications.

Dans un mode de réalisation préféré du procédé selon l'invention, on a recours à l'une ou l'autre des dispositions suivantes :
- la page d'informations demandée initialement est téléchargée dans le dispositif de communications entre les étapes e) et f);
- préalablement à l'étape b), des moyens de transmission de données reliés au réseau interceptent la première requête d'accès, puis modifient cette dernière pour l'envoyer en direction des moyens de génération de page d'informations fictive;
- préalablement à l'étape e), les moyens de transmission de données interceptent la seconde requête d'accès, puis modifient cette dernière pour l'envoyer en direction du serveur d'informations;
- préalablement à l'étape b) :
   - a1) la première requête d'accès est transmise au serveur d'informations,
   - a2) le serveur d'informations envoie en direction du dispositif de communications une réponse à la première requête d'accès, réponse qui contient la page d'informations demandée,
   - a3 ) des moyens de transmission de données reliés au réseau interceptent ladite réponse, puis modifient cette dernière pour l'envoyer en direction des moyens de génération de page d'informations fictive;
- au cours d'une étape g) qui fait suite à l'étape f), les moyens de commande de navigation déclenchent l'envoi, par le dispositif de communications, d'une requête auprès d'un serveur de traitement de données, ladite requête comprenant la durée de téléchargement calculée à l'étape f).

La présente invention concerne également un système de mesure des paramètres de qualité d'un service de type Web dépendant de la qualité d'un réseau, notamment de la durée de téléchargement, sur un dispositif de communications, d'une page d'informations envoyée par un serveur d'informations, via ce réseau.

Ce système a également pour but de remédier aux inconvénients précités.

A cet effet, le système selon l'invention est caractérisé en ce qu'il comprend des moyens de génération de page d'informations fictive reliés audit réseau et destinés à envoyer en retour au dispositif de communications qui établit, auprès du serveur d'informations, une requête d'accès selon laquelle est demandée une page d'informations, une page d'informations fictive, ladite page comprenant des moyens de commande de navigation sur le réseau, par le dispositif de communications, et des moyens de mesure d'au moins un paramètre de qualité de service.

Dans des modes de réalisation préférés du système selon l'invention, on a recours à l'une et/ou à l'autre des dispositions suivantes :
- le réseau est de type Internet,
- des moyens de transmission de données sont reliés au réseau et sont destinés à intercepter et à modifier la première requête d'accès,
- les moyens de génération de page d'informations fictive consistent en un serveur,
- les moyens de génération de page d'informations fictive consistent en un module qui est contenu dans le serveur d'informations,
- les moyens de transmission de données comprennent un module de réécriture d'adresse URL de la page d'informations initialement demandée,
- les moyens de transmission de données comprennent un module de traduction destiné à traduire d'une part le nom de domaine du serveur d'informations en une adresse Internet correspondant à celle d'un serveur comprenant lesdits moyens de génération de page d'informations fictive et, d'autre part, le nom de domaine du serveur comprenant lesdits moyens de génération de page d'informations fictive en l'adresse Internet du serveur d'informations,
- des moyens de transmission de données sont reliés au réseau et sont destinés à intercepter et à modifier la réponse à la première requête d'accès envoyée par le serveur d'informations, de façon à l'envoyer en direction des moyens de génération de page d'informations fictive,
- les moyens de transmission de données comprennent un dispositif utilisant un protocole d'adaptation de contenu de fichiers Internet de type iCAP, et un serveur de type iCAP relié à ce dispositif,
- un serveur de traitement de données est relié au dispositif de communications via le réseau informatique, ce serveur de traitement de données étant apte à recevoir, en provenance du dispositif de communications, au moins une mesure de paramètre calculée par les moyens de mesure, et à traiter cette mesure.

D'autres caractéristiques et avantages de l'invention apparaîtront au cours de la description suivante d'un mode de réalisation, donné à titre d'exemple non limitatif, en regard des dessins annexés.

Sur les dessins :
- la figure 1 représente l'architecture générale du système de mesure selon la présente invention,
- la figure 2A représente la page d'informations fictive telle que visualisée sur le dispositif de communications du client,
- la figure 2B représente la structure de la page d'informations fictive de la figure 2A,
- la figure 3 représente une première variante du système de mesure de la figure 1,
- la figure 4 représente une seconde variante du système de mesure de la figure 1.

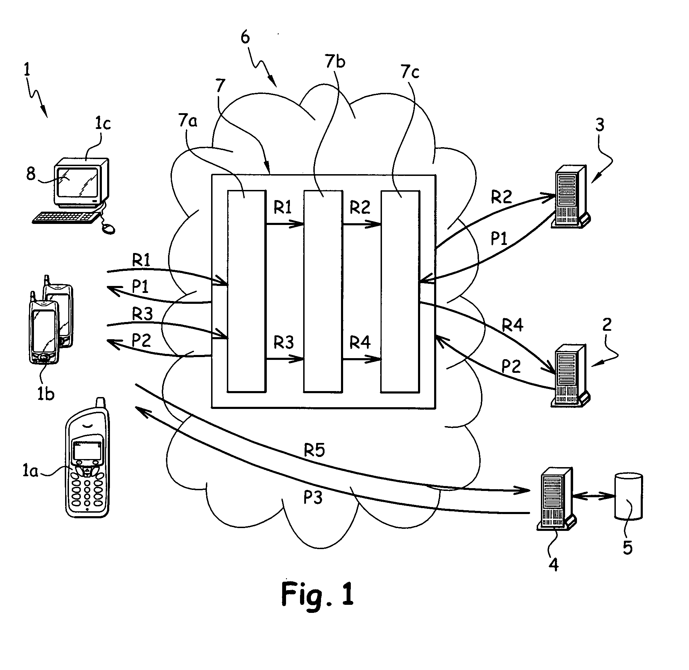

Comme on peut le voir sur la figure 1, le système selon la présente invention comprend :
- un dispositif de communications 1 appartenant à un client,
- un serveur d'informations 2,
- un serveur 3 hébergeant un site dans lequel est installé un programme conçu pour générer des pages d'informations fictives à la place du serveur d'informations 2,
- un serveur de statistiques 4 relié à une base de données 5,
- un réseau de données 6 auquel sont reliés le dispositif de communications 1, le serveur d'informations 2, le serveur 3 et le serveur de statistiques 4,
- un module de transmission de données 7 installé au coeur du réseau 6 et relié au dispositif de communications 1, au serveur d'informations 2 et au serveur 3.

Dans l'exemple représenté:
- le dispositif de communications 1 est un téléphone mobile classique 1a, par exemple de type GSM, un assistant personnel numérique 1b ou un ordinateur personnel 1c (PC),
- le réseau 6 est du type Internet,
- le serveur 2 est de type Web, à savoir qu'il héberge un ou plusieurs sites Web qui présentent de l'information sur une organisation, un projet, une activité, un individu, etc....

On va maintenant décrire, en référence à la figure 1, le procédé de mesure de la durée de téléchargement d'une page Web sur le dispositif de communications 1.
1) Le client, détenteur du dispositif de communications 1, par exemple l'ordinateur personnel 1c, émet une requête R1 à destination d'un site s1 du serveur Web 2. Une telle requête se présente par exemple sous la forme http://www.s1.com/menu.html.
2) Une première interface d'émission/réception de requêtes 7a du module de transmission 7 reçoit la requête. Cette interface 7a transmet cette dernière à un module 7b qui est programmé pour modifier l'adresse Internet affectée à cette requête de façon à la transmettre en direction du serveur de génération de page d'informations fictives 3 au lieu du serveur Web 2. La requête ainsi modifiée, appelée R2, se présente par exemple sous la forme www.serveur3.com/appli?url_ originale où :
   - "serveur3" est le serveur 3 qui va renvoyer la page Web fictive au client,
   - "appli" correspond à une application destinée à être exécutée dans le serveur 3 pour générer la page Web fictive en réponse à la requête R1 modifiée du client. Le langage utilisé pour cette application est par exemple du type php ("Hypertext Preprocessor"), cgi (" Common Gateway Interface"), une servlet en Java ou similaires,
   - et url-originale correspond à l'adresse URL contenue initialement dans la requête R1 du client.

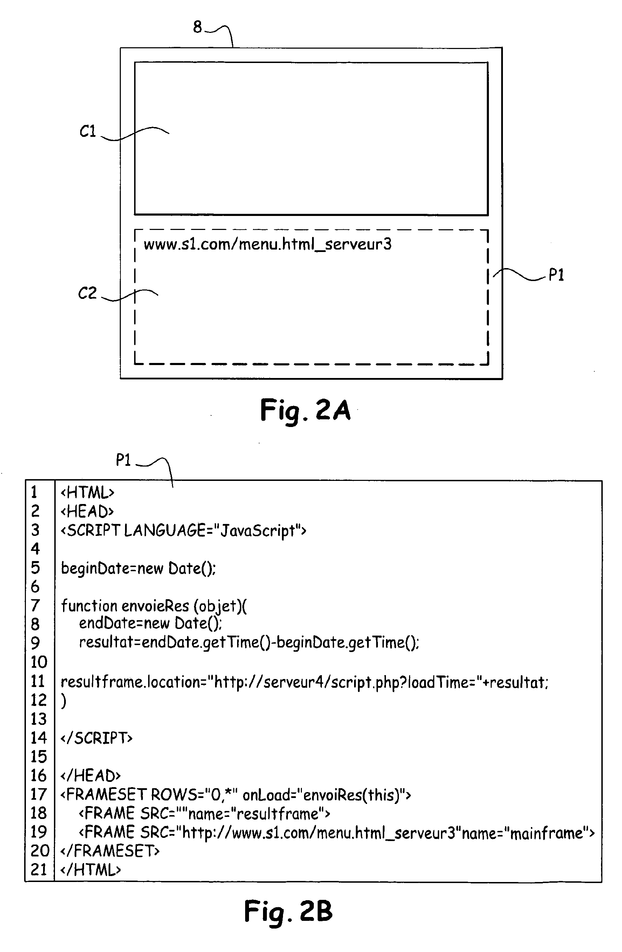

   Dans l'exemple représenté sur la figure 1, le module 7b délivre à une seconde interface d'émission/réception de requêtes 7c du module de transmission 7 la requête modifiée R2 suivante :
   www.serveur 3.com/script.php?www.s1.com/menu.html.
3) L'interface 7c envoie alors la requête modifiée R2 en direction du serveur 3.
4) Le serveur 3 traite la requête modifiée R2 de façon à générer, en remplacement de la page Web demandée initialement par le client, une page d'accueil HTML fictive P1 qui est destinée à s'afficher sur l'écran 8 de l'ordinateur 1c du client de la façon illustrée à la figure 2A.
   Cette page P1 comporte un cadre C1 qui est invisible sur l'écran 8, et un cadre C2, qui, lui, est visible.
   Le cadre invisible C1 contient soit une application écrite dans un langage de script, soit une applet qui, comme on le verra de façon plus détaillée dans la suite de la description, sont destinées à entraîner la génération de requêtes par le navigateur de l'ordinateur 1 c du client en direction du serveur 3 puis du serveur de statistiques 4.
   Le cadre visible C2 pointe quant à lui vers la page Web demandée initialement par le client. Cependant, il faut noter que l'adresse URL source de cette page ne peut pas être www.s1.com/menu.html mais plutôt www.s1.com/menu.html_serveur3, car le procédé bouclerait sans fin sur les points 1) à 4) ci-dessus.
   Comme on peut le voir sur la figure 2B, la structure de cette page P1 fictive consiste en des lignes de code qui, dans l'exemple représenté, sont des lignes de code Javascript (ligne 3).
   Les lignes 17 à 20 définissent plus particulièrement la structure proprement dite de la page fictive P1, c'est à dire les deux cadres C1, C2 qui la constituent.
   Plus précisément:
   - le cadre C1 a une taille nulle (ROWS="0,*" à la ligne 17). Il n'apparaît donc pas sur l'écran 8 de l'ordinateur 1c du client. Il ne pointe par ailleurs sur aucune page Web (SRC="" à la ligne 18).
   - le cadre C2 pointe sur la page Web demandée initialement par le client (SRC=http://www.s1.com/menu.html_serveur3 à la ligne 19).

   En référence à nouveau à la figure 1,
5) Le serveur 3 transmet la page fictive P1, via le module de transmission 7, en direction de l'ordinateur 1c.
6) La page fictive P1 est alors téléchargée dans l'ordinateur 1c, ce qui déclenche l'activation de la commande beginDate=new Date() mentionnée à la ligne 5, figure 2B, la variable beginDate contenant alors la date de début de téléchargement de cette page P1.
7) L'exécution de cette commande provoque le déclenchement du navigateur de l'ordinateur 1c qui effectue une requête R3 en direction du serveur 2, à l'adresse www.s1.com/menu.html_ serveur3, pour obtenir la page Web demandée initialement.
8) L'interface d'émission/réception de requêtes 7a du module de transmission 7 reçoit la requête R3 et la transmet au module 7b qui est programmé pour repérer les adresses terminant par "serveur3" et modifier l'adresse Internet affectée à cette requête de façon à la transmettre en direction du serveur Web 2, en regénérant l'URL de la page réelle de ce serveur, c'est à dire en supprimant "serveur3".
9) Le module 7b délivre à l'interface d'émission/réception de requêtes 7c une requête modifiée R4 ayant comme adresse www.s1.com/menu.html.
10)L'interface 7c envoie alors la requête modifiée R4 en direction du serveur 2.
11) Le serveur 2 traite la requête modifiée R4 de façon à générer la page Web demandée initialement par le client puis transmet cette page, désignée par la référence P2, via le module de transmission 7, en direction de l'ordinateur 1 c.
12)La page P2 est alors téléchargée dans l'ordinateur 1 c ce qui déclenche un appel à la fonction "envoieRes" (ligne 7, figure 2B), de façon à obtenir une nouvelle date de téléchargement (ligne 8, figure 2B), laquelle est considérée comme la date de fin de téléchargement de la page Web P2, ladite fonction faisant ensuite la différence entre cette date de fin de téléchargement et la date de début de téléchargement obtenue à la ligne 5 pour en déduire la durée de téléchargement.
13)L'exécution complète de cette fonction provoque le déclenchement du navigateur de l'ordinateur 1c qui effectue une requête R5 en direction du serveur de statistiques 4, cette requête se présentant par exemple sous la forme www.serveur4.com et comprenant la durée de téléchargement calculée ci-dessus. Cette requête 5 n'est pas destinée à produire un affichage puisqu'elle est incluse dans le cadre invisible C1 de la figure 2A. Elle ne sert qu'à transmettre des données.
14)Suite à la réception de la requête R5, le serveur de statistiques 4 stocke cette information de données dans la base de données 5 et déclenche les traitements nécessaires à la production de statistiques.
15)Le serveur de statistiques 4 renvoie ensuite en réponse à l'ordinateur 1c, via le module de transmission 7, une page Web vide, désignée par la référence P3, laquelle page ne change pas l'apparence de la page visualisée par l'utilisateur.

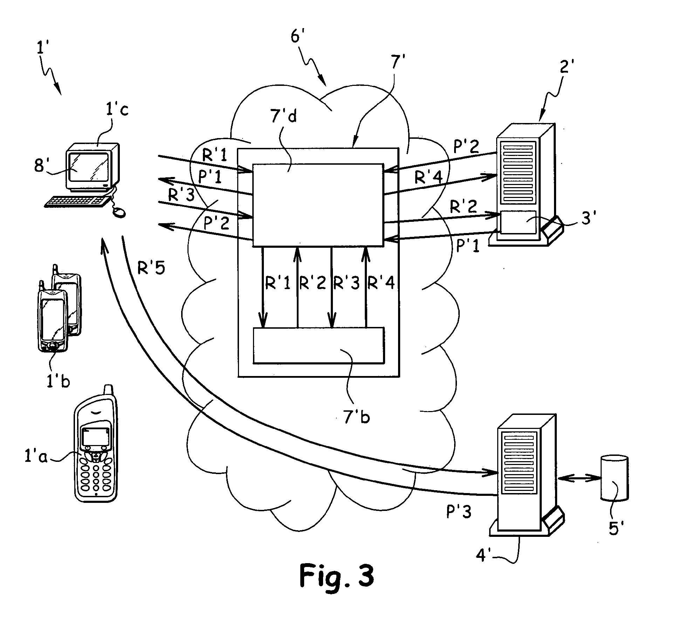

On va maintenant décrire, en référence à la figure 3, une première variante du système de mesure représenté sur la figure 1.

Le système représenté sur la figure 3 comprend de façon analogue à la figure 1:
- un dispositif de communications 1' appartenant à un client,
- un serveur d'informations 2',
- un serveur de statistiques 4' relié à une base de données 5',
- un réseau de données 6' auquel sont reliés le dispositif de communications 1', le serveur d'informations 2', et le serveur de statistiques 4',
- un module de transmission de données 7' installé au coeur du réseau 6' et relié au dispositif de communications 1' et au serveur d'informations 2'.

Dans l'exemple représenté:
- le dispositif de communications 1' est, comme sur la figure 1, un téléphone mobile classique 1'a, par exemple de type GSM, un assistant personnel numérique 1'b ou un ordinateur personnel 1'c (PC),
- le réseau 6' est du type Internet,
- le serveur 2' est analogue au serveur 2, si ce n'est qu'il comprend en outre un module 3' dans lequel est installé un programme (ex: script php) conçu pour générer des pages d'informations fictives,
- le module de transmission de données 7' comprend un dispositif 7'd implémentant/intégrant un protocole d'adaptation de contenu de fichiers Internet, par exemple le protocole de type iCAP, pour dialoguer avec un serveur 7'b de type iCAP relié à ce dispositif.

Le dispositif 7'd est de préférence un serveur proxy cache qui joue le rôle de client iCAP.

Plus précisément, le module 3' est soit un serveur virtuel installé sur le serveur 2', soit un module logiciel de type script php installé sur le serveur 2' mais intégré à un site s'1 de ce dernier.

On va maintenant décrire, en référence à la figure 3, le procédé de mesure de la durée de téléchargement d'une page Web sur le dispositif de communications 1'.
1) Le client, détenteur du dispositif de communications 1', par exemple l'ordinateur personnel 1'c, émet une requête R'1 à destination d'un site s'1 du serveur Web 2'. Une telle requête se présente par exemple sous la forme http://www.s'1.com/menu.html. Le navigateur de l'ordinateur 1'c est configuré pour que la requête R'1 soit dirigée en direction du serveur proxy cache 7'd.
2) Le serveur proxy cache 7'd intercepte la requête R'1 et la dirige vers le serveur iCAP 7'b.
3) Le serveur iCAP 7'b modifie l'adresse Internet affectée à la requête R'1, comme cela a été décrit à la figure 1, de façon à obtenir la requête modifiée R'2 suivante :
   www.module3'.com/script.php?www.s'1.com/menu.html
      ou
   www.s'1.com/module3'?www.s'1.com/menu.html,
   puis envoie la requête modifiée R'2 au serveur proxy cache 7'd.
4) Le serveur proxy cache 7'd relaye alors la requête modifiée R'2 en direction du module 3' de génération de page d'informations fictive qui est contenu dans le serveur 2'.
5) Le module 3' traite la requête modifiée R'2 de façon à générer, en remplacement de la page Web demandée initialement par le client, une page d'accueil HTML fictive P'1 qui est destinée à s'afficher sur l'écran 8' de l'ordinateur 1'c du client d'une façon analogue à celle illustrée à la figure 2A.
   Cette page P'1 étant similaire à la page P1 décrite plus haut dans la description, la description de la structure d'une telle page ne sera pas effectuée à nouveau.
6) Le serveur 2' transmet la page fictive P'1, via le serveur proxy cache 7'd, en direction de l'ordinateur 1'c.
7) La page fictive P'1 est alors téléchargée dans l'ordinateur 1'c, ce qui déclenche l'activation de la commande beginDate=new Date() mentionnée à la ligne 5, figure 2B, la variable beginDate contenant alors la date de début de téléchargement de cette page P'1.
8) L'exécution de cette commande provoque le déclenchement du navigateur de l'ordinateur 1'c qui effectue une requête R'3 en direction du serveur 2', à l'adresse www.s'1.com/menu.html_module3', pour obtenir la page Web demandée initialement.
9) Le serveur proxy cache 7'd intercepte la requête R'3 et la dirige vers le serveur iCAP 7'b.
10) Le serveur iCAP 7'b modifie l'adresse Internet affectée à la requête R'3, comme cela a été décrit à la figure 1, de façon à obtenir la requête modifiée R'4 suivante :
   www.s'1.com/menu.html.
   puis envoie la requête modifiée R'4 au serveur proxy cache 7'd.
11) Le serveur proxy cache 7'd relaye alors la requête modifiée R'4 en direction du serveur 2'.
12) Le serveur 2' traite la requête modifiée R'4 de façon à générer la page Web demandée initialement par le client, puis transmet cette page, désignée par la référence P'2, via le serveur proxy cache 7'e, en direction de l'ordinateur 1 c.
13) La page P'2 est téléchargée dans l'ordinateur 1 c, ce qui déclenche un appel à la fonction "envoieRes" (ligne 7, figure 2B), de façon à obtenir une nouvelle date de téléchargement (ligne 8, figure 2B), laquelle est considérée comme la date de fin de téléchargement de la page Web P'2, ladite fonction faisant ensuite la différence entre cette date de fin de téléchargement et la date de début de téléchargement obtenue à la ligne 5 pour en déduire la durée de téléchargement.
14) L'exécution complète de cette fonction provoque le déclenchement du navigateur de l'ordinateur 1c qui effectue une requête R'5 en direction du serveur de statistiques 4, ladite requête R'5 étant analogue à la requête R5 décrite plus haut en référence à la figure 1.
15)Suite à la réception de la requête R'5, le serveur de statistiques 4 stocke cette information de données dans la base de données 5 et déclenche les traitements nécessaires à la production de statistiques.
16)Le serveur de statistiques 4 renvoie ensuite en réponse à l'ordinateur 1c, une page Web vide, désignée par la référence P'3.

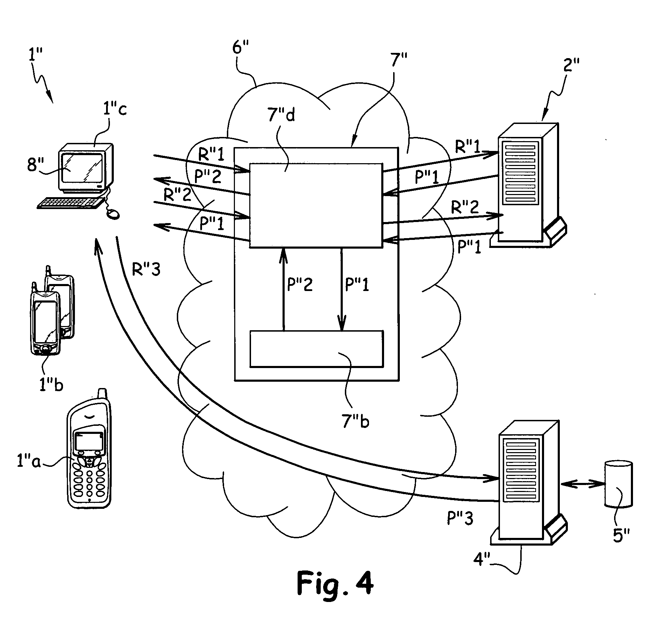

On va maintenant décrire, en référence à la figure 4, une seconde variante du système de mesure représenté sur la figure 1.

Le système représenté sur la figure 4 comprend de façon analogue à la figure 1:
- un dispositif de communications 1" appartenant à un client,
- un serveur d'informations 2",
- un serveur de statistiques 4" relié à une base de données 5",
- un réseau de données 6" auquel sont reliés le dispositif de communications 1 ", le serveur d'informations 2", et le serveur de statistiques 4",
- un module de transmission de données 7" installé au coeur du réseau 6" et relié au dispositif de communications 1" et au serveur d'informations 2".

Dans l'exemple représenté:
- le dispositif de communications 1" est, comme sur la figure 1, un téléphone mobile classique 1"a, par exemple de type GSM, un assistant personnel numérique 1"b ou un ordinateur personnel 1"c (PC),
- le réseau 6" est du type Internet,
- le serveur 2" est analogue au serveur 2 si ce n'est qu'il contient en outre un alias qui est destiné à faire correspondre l'adresse d'un site d'informations à, indifféremment, deux noms de sites s1" et s3" qui servent alors le même contenu,
- le module de transmission de données 7" comprend un dispositif 7"d utilisant un protocole d'adaptation de contenu de fichiers Internet de type iCAP et un serveur 7"b de type iCAP relié à ce dispositif.

Le dispositif 7"d est de préférence un serveur proxy cache qui joue le rôle de client iCAP.

On va maintenant décrire, en référence à la figure 4, le procédé de mesure de la durée de téléchargement d'une page Web sur le dispositif de communications 1".
1) Le client, détenteur du dispositif de communications 1", par exemple l'ordinateur personnel 1"c, émet une requête R"1 à destination du site d'informations s"1 du serveur Web 2". Une telle requête se présente par exemple sous la forme http://www.s"1.com/index.html. Le navigateur de l'ordinateur 1"c est configuré pour que la requête R"1 soit dirigée en direction du serveur proxy cache 7"d.
2) Le serveur proxy cache 7"d transfère cette requête vers le serveur 2".
3) Le serveur 2" traite la requête R"1 de façon à générer une page Web P"1 demandée par le client, puis envoie cette dernière en direction de l'ordinateur 1"c.
4) Le serveur proxy cache 7"d intercepte la page P"1 et la dirige vers le serveur iCAP 7"b.
5) Le serveur iCAP 7"b modifie le contenu de cette page P"1 de façon à générer, en remplacement de cette page, une page d'accueil HTML fictive P"2 qui est destinée à s'afficher sur l'écran 8" de l'ordinateur 1"c du client d'une façon analogue à celle illustrée à la figure 2A.
   Cette page P"1 étant similaire à la page P1 décrite plus haut dans la description, la description de la structure d'une telle page ne sera pas effectuée à nouveau.
6) Le serveur iCAP 7"b renvoie la page fictive P"1 au serveur proxy 7"d.
7) Le serveur proxy 7"d met la page fictive P"1 en cache à l'adresse Internet www.s"1.com/index.html et la relaye en direction de l'ordinateur 1 "c.
8) La page fictive P"2 est alors téléchargée dans l'ordinateur 1"c, ce qui déclenche l'activation de la commande beginDate=new Date() mentionnée à la ligne 5, figure 2B, la variable beginDate contenant alors la date de début de téléchargement de cette page P"2.
9) L'exécution de cette commande provoque le déclenchement du navigateur de l'ordinateur 1"c qui effectue une requête R"2 en direction du serveur 2" pour obtenir la page Web P"1 demandée initialement, ladite requête étant effectuée à l'adresse www.s"3.com/index.html.
10) Le serveur proxy cache 7"d intercepte la requête R"2 et la dirige vers le serveur 2".
11) Suite à la réception de la requête R"2 dans le serveur 2", cette dernière est relayée à l'adresse www.s"3.com grâce à l'alias défini au préalable dans le serveur 2" entre s"1 et s"3.
12) Le serveur 2" traite la requête R"2 de façon à générer la page Web P"1 demandée initialement par le client et envoie cette dernière au serveur proxy cache 7"d.
13) La page P"1 est mise en cache dans le serveur proxy cache 7"d puis envoyée à l'ordinateur 1"c.
14) Suite à la réception de cette page dans l'ordinateur 1"c, un appel à la fonction "envoieRes" (ligne 7, figure 2B) est alors exécuté, de façon à obtenir une nouvelle date de téléchargement (ligne 8, figure 2B), laquelle est considérée comme la date de fin de téléchargement de la page Web P"1, ladite fonction faisant ensuite la différence entre cette date de fin de téléchargement et la date de début de téléchargement obtenue à la ligne 5 pour en déduire la durée de téléchargement.
15) L'exécution complète de cette fonction provoque le déclenchement du navigateur de l'ordinateur 1"c qui effectue une requête R"3 en direction du serveur de statistiques 4", ladite requête R"3 étant analogue à la requête R5 décrite plus haut en référence à la figure 1.
16) Suite à la réception de la requête R"3, le serveur de statistiques 4" stocke cette information de données dans la base de données 5" et déclenche les traitements nécessaires à la production de statistiques.
17) Le serveur de statistiques 4" renvoie ensuite en réponse à l'ordinateur 1"c, une page Web vide, désignée par la référence P"3.

D'une manière générale, il convient de noter que dans les trois exemples qui viennent d'être décrits en référence aux figures 1, 3 et 4, lorsque le téléchargement de la page P2, P'2 ou P"1 est interrompu, notamment à la suite d'une erreur ou que la connexion échoue, il est possible d'émettre quand même une requête en direction du serveur 4, 4' ou 4" pour en tirer des statistiques. Une telle modalité qui ne peut être mise en oeuvre dans les outils d'analyse côté serveur de l'art antérieur procure ainsi un avantage supplémentaire au système de mesure de la présente invention.

Il va de soi que le mode de réalisation et les variantes qui ont été décrits ci-dessus ont été données à titre purement indicatif et nullement limitatif, et que de nombreuses modifications peuvent être facilement apportées par l'homme de l'art sans pour autant sortir du cadre de l'invention.

C'est ainsi que le serveur spécifique 3 de la figure 1 pourrait être supprimé, à condition d'adapter le serveur Web 2 de la même façon que le serveur Web 2'.

On pourrait également imaginer, en référence à la figure 3, que le module 3' soit installé sur un autre serveur que le serveur Web 2' dédié à cet usage. Ce serveur pourrait être par exemple le serveur iCAP 7'd.

De façon plus générale, on pourrait en outre remplacer les modules de transmission de données 7, 7' et 7" par un module de réécriture d'adresse URL de la page d'informations initialement demandée par le client.

Un tel type de module existe dans l'état actuel de la technique, notamment dans de nombreux serveurs proxy caches et dans certains équilibreurs de charge ("load balancers") de niveau 4-7.

Plus précisément, un tel module comporte une fonctionnalité du type "URL-rewrite" qui consiste à définir des règles permettant de modifier une requête en une autre à partir d'expressions régulières.

Dans le cas par exemple du mode de réalisation représenté sur la figure 1, ces règles imposeraient des transformations de requêtes du type:
- www.s1.com/menu.html vers
   www.serveur3.com/script.php?www.s1.com/menu.html
- www.s1.com/menu.html_serveur3 vers www.s1.com/menu.html.

On pourrait également remplacer les modules de transmission de données 7, 7' et 7" par un module de traduction qui serait destiné, dans le cas par exemple du mode de réalisation de la figure 1, à traduire via des alias, d'une part le nom de domaine du site s1 du serveur Web 2 en une adresse Internet correspondant à celle du serveur 3, et, d'autre part, le nom de domaine du serveur 3 en l'adresse Internet du site s1 du serveur Web 2.

Une telle modalité peut être réalisée :
- soit en utilisant des règles de réécriture d'URL comme mentionné ci-dessus,
- soit en modifiant le serveur DNS ("Domain Name Server") du cache en coupure pour que le nom de domaine du site s1 du serveur Web 2, vwww.s1.com renvoie l'adresse Internet du serveur 3 contenant le site de génération de pages fictives, et inversement.

Enfin, le système selon l'invention pourrait mesurer un autre paramètre que la durée de téléchargement d'une page Web, par exemple une durée de connexion sur un site d'informations, une durée de résolution DNS, etc....

## Revendications

1. Procédé de mesure des paramètres de qualité d'un service de type web dépendant de la qualité d'un réseau (6;6';6"), notamment de la durée de téléchargement, sur un dispositif de communications (1;1';1"), d'une page d'informations envoyée par un serveur d'informations (2;2';2"), via le réseau, le procédé étant **caractérisé en ce qu'**il comprend au moins les étapes suivantes:
- a) le dispositif de communications (1;1';1") établit une première requête d'accès (R1;R'1;R"1) auprès du serveur d'informations selon laquelle est demandé le téléchargement d'une page d'informations (P2;P'2;P"1),
- b) des moyens de génération de page d'informations fictive (3;3';2") reliés au réseau (6;6';6") envoient en retour en direction du dispositif de communications (1;1';1") une page d'informations fictive (P1;P'1;P"2), ladite page comprenant des moyens de commande de navigation sur le réseau, par le dispositif de communications (1;1';1"), et des moyens de mesure d'au moins un paramètre de qualité de service,
- c) les moyens de mesure déterminent une date de début de mesure correspondant au téléchargement de cette page fictive,
- d) les moyens de commande de navigation déclenchent l'envoi, par le dispositif de communications (1;1';1"), d'une seconde requête d'accès (R3;R'3;R"2) auprès du serveur d'informations (2;2';2") selon laquelle est demandé le téléchargement de la page d'informations qui aurait dû être retournée initialement,
- e) le serveur d'informations (2;2';2") envoie la page d'informations demandée initialement (P2;P'2;P"1) en direction du dispositif de communications (1;1';1"), les moyens de mesure déterminant alors une date de fin de mesure,
- f) les moyens de mesure calculent la durée de mesure qui correspond à la différence entre la date de fin de mesure et la date de début de mesure.

2. Procédé selon la revendication 1, dans lequel la page d'informations demandée initialement (P2;P'2;P"1) est téléchargée dans le dispositif de communications (1;1';1") entre les étapes e) et f).

3. Procédé selon la revendication 1 ou 2, dans lequel, préalablement à l'étape b), des moyens de transmission de données (7;7') reliés au réseau interceptent la première requête d'accès (R1; R'1), puis modifient cette dernière pour l'envoyer en direction des moyens de génération de page d'informations fictive.

4. Procédé selon l'une quelconque des revendications 1 à 3, dans lequel préalablement à l'étape e), les moyens de transmission de données (7;7') interceptent la seconde requête d'accès (R3;R'3), puis modifient cette dernière pour l'envoyer en direction du serveur d'informations (2;2').

5. Procédé selon la revendication 1 ou 2, dans lequel, préalablement à l'étape b) :
- a1) la première requête d'accès (R"1) est transmise au serveur d'informations (2"),
- a2) le serveur d'informations (2") envoie en direction du dispositif de communications (1") une réponse à la première requête d'accès, réponse qui contient la page d'informations demandée (P"1),
- a3 ) des moyens de transmission de données (7") reliés au réseau (6") interceptent ladite réponse, puis modifient cette dernière pour l'envoyer en direction des moyens de génération de page d'informations fictive.

6. Procédé selon l'une quelconque des revendications 1 à 5, comprenant en outre, à la suite de l'étape f), une étape g) au cours de laquelle les moyens de commande de navigation déclenchent l'envoi, par le dispositif de communications (1;1';1"), d'une requête (R5;R'5;R"3) auprès d'un serveur de traitement de données (4;4';4"), ladite requête comprenant la durée de mesure calculée à l'étape f).

7. Système de mesure des paramètres de qualité d'un service de type web dépendant de la qualité d'un réseau (6;6';6"), notamment de la durée de téléchargement, sur un dispositif de communications (1;1';1"), d'une page d'informations envoyée par un serveur d'informations (2;2';2"), via le réseau, ledit système étant **caractérisé en ce qu'**il comprend des moyens de génération de page d'informations fictive reliés audit réseau et destinés à envoyer en retour au dispositif de communications qui établit, auprès du serveur d'informations, une requête d'accès (R1;R'1;R"1) selon laquelle est demandée une page d'informations, une page d'informations fictive (P1;P'1;P"1), ladite page comprenant des moyens de commande de navigation sur le réseau, par le dispositif de communications, et des moyens de mesure d'au moins un paramètre de qualité de service.

8. Système selon la revendication 7, dans lequel le réseau (6;6';6") est de type Internet.

9. Système selon la revendication 7 ou 8, comprenant en outre des moyens de transmission de données (7;7') qui sont reliés au réseau et qui sont destinés à intercepter et à modifier la première requête d'accès (R1;R'1 ).

10. Système selon l'une quelconque des revendications 7 à 9, dans lequel les moyens de génération de page d'informations fictive consistent en un serveur (3).

11. Système selon l'une quelconque des revendications 7 à 9, dans lequel les moyens de génération de page d'informations fictive consistent en un module (3') qui est contenu dans le serveur d'informations (2').

12. Système selon la revendication 9, dans lequel les moyens de transmission de données (7;7') comprennent un module de réécriture d'adresse URL de la page d'informations initialement demandée.

13. Système selon la revendication 9, dans lequel les moyens de transmission de données (7;7') comprennent un module de traduction destiné à traduire d'une part le nom de domaine du serveur d'informations (2;2';2") en une adresse Internet correspondant à celle d'un serveur comprenant lesdits moyens de génération de page d'informations fictive et, d'autre part, le nom de domaine du serveur comprenant lesdits moyens de génération de page d'informations fictive en l'adresse Internet du serveur d'informations.

14. Système selon la revendication 7 ou 8, comprenant en outre des moyens de transmission de données (7") qui sont reliés au réseau (6") et qui sont destinés à intercepter et à modifier la réponse (P"1) à la première requête d'accès (R"1) envoyée par le serveur d'informations (2"), de façon à l'envoyer en direction des moyens de génération de page d'informations fictive.

15. Système selon les revendications 9 et 14, dans lequel les moyens de transmission de données (7';7") comprennent un dispositif (7'd;7"d) utilisant un protocole d'adaptation de contenu de fichiers Internet de type iCAP, et un serveur (7'b;7"b) relié à ce dispositif.

16. Système selon l'une quelconque des revendications 7 à 15, comprenant en outre un serveur de traitement de données (4;4';4") qui est relié au dispositif de communications (1;1';1") via ledit réseau, le serveur de traitement de données étant apte à recevoir, en provenance du dispositif de communications, au moins une mesure du paramètre de qualité de service calculée par les moyens de mesure, et à traiter cette mesure.
